# EUROPEAN PATENT APPLICATION

(11) **EP 1 130 496 A2**
(43) Date of publication of application: **05.09.2001**
(21) Application number: 01101537.7
(22) Date of filing: 24.01.2001
(51) Int. Cl.: G06F 1/00

(54) **Apparatus and method for managing contents in a computer**

(30) Priority: 26.01.2000 JP 2000017218
(71) Applicant: KABUSHIKI KAISHA TOSHIBA, Kawasaki-shi (JP)
(72) Inventor: Satoshi, Watanabe, c/o Kabushiki Kaisha Toshiba, Minato-ku, Tokyo 105-8001 (JP)
(74) Representative: Henkel, Feiler, Hänzel

(57) **Abstract**

A library display section (80) and a PD display section (110) are displayed in a management window (70) on a PD edit screen. By selecting conditions to be retrieved by a retrieval condition setting section (81) and clicking a retrieval key in a retrieval key setting section (82), a music data storage section is retrieved and relevant contents are displayed on a library list display section (87). By selecting contents displayed on the library list display section (87) and operating an add button (88), the selected contents are transmitted to the PD and displayed in a PD contents list display section (112). At this time, the contents-transferable number of times that is displayed in the list of the library list display section (87) is decreased by one. If the contents-transferable number of times is managed, the number of duplicated contents can be limited.

## Description

The present invention relates to a contents management apparatus and contents management method in a computer having a function of managing the number of duplicated contents of music, movies or the like, which can be stored in a storage medium.

Conventionally, the copy of contents (copyrighted materials) of music, movies and the like, which can be stored in a storage medium, has been managed.
A balance has been considered between the protection of copyright and the convenience of use by managing the generation of copy and the number of copies.

Recently, the concept of "move" has emerged instead of copy management. While no original data is erased in the copy management, data is transferred to a different location (medium) and the original data is erased in the "move." The digitization of contents and the spread of networks form the background to the emergence of "move" for protection against copy.

Since a copy has recently been made faithfully to the original through a network or the like, the copyright of the original becomes difficult to protect only by the copy management. Furthermore, no copyright can be managed by an unlimited move from medium to medium, e.g., the for-profit distribution of data (by move).

It is thus difficult to reliably management the duplication of the original data, especially the contents to be protected by copyright.

The present invention has been developed in order to resolve the above problems. It is accordingly an object of the present invention to provide a contents management apparatus and contents management method in a computer, which allows contents to be easily written to a storage medium and read therefrom and managements the number of duplicate contents to be recorded on the storage medium to limit the duplication of contents and thus protect the contents by copyright.

In order to attain the above object, a first aspect of the present invention provides a contents management apparatus in a computer for managing the number of times contents are transferred between the computer and a recording and reproduction device, the contents management apparatus comprising:
management screen display means for displaying on a display section of the computer a library management screen of contents and a device management screen for managing contents of a device; and
contents management means for displaying the contents-transferable number of times, which is predetermined for each content, on the library management screen, and for displaying a number obtained by subtracting a predetermined number from the contents-transferable number of times every check-out when contents are transferred from the library management screen to the device management screen, and displaying a number obtained by adding a predetermined number to the contents-transferable number of times every check-in when the contents transferred to the device management screen are returned to the library management screen.

As described above, the contents library management screen and the device management screen are displayed on the display section of the computer, and the contents-transferable number of times, which is predetermined for each content, is displayed on the library management screen. A number, which is obtained by subtracting a predetermined number from the contents-transferable number of times every check-out, is displayed, while a number, which is obtained by adding a predetermined number thereto every check-in, is displayed. The contents can thus be easily written to a device storage medium and read therefrom. Moreover, the number of duplicate contents that can be recorded on the storage medium can be managed with reliability.

A second aspect of the present invention provides a contents management apparatus in a computer for managing the number of times contents are transferred between the computer and a plurality of recording and reproduction devices, the contents management apparatus comprising:
management screen display means for displaying on a display section of the computer a library management screen for managing transfer of contents between the computer and each of the devices; and
contents screen selection means for selecting a tag corresponding to each of the devices on the library management screen and displaying a device management screen for managing the device of the selected tag to the forefront.

As described above, tags are displayed on the library management screen. If one of the tags is selected, its corresponding device management screen is displayed to the forefront. Thus, a management screen corresponding to each device can be selected easily and a process for each device can be performed rapidly.

A third aspect of the present invention provides a contents management apparatus in a computer for managing the number of times contents are transferred between the computer and a recording and reproduction device, the contents management apparatus comprising display means for displaying on a display section of the computer a library management screen of contents and a device management screen for managing contents of a device,
wherein the library management screen serves to display the number of times contents are transferable.

As described above, a library management screen having a security function and a device management screen are displayed on the display section of the computer correspondingly to each other. Therefore, even when an operator processes contents the security of which is not managed, he or she can management the security by reading those contents from the device management screen and writing them to the library management screen, with the result that the number of duplicate contents that can be recorded on a storage medium can be regulated with reliability.

A fourth aspect of the present invention provides a contents management method in a computer for managing the number of times contents are transferred between the computer and a recording and reproduction device, the contents management method comprising the steps of:
displaying on a display section of the computer a library management screen of contents and a device management screen for managing contents of a device, and displaying the contents-transferable number of times, which is predetermined for each content, on the library management screen; and
displaying a number obtained by subtracting a predetermined number from the contents-transferable number of times every check-out when contents are transferred from the library management screen to the device management screen, and displaying a number obtained by adding a predetermined number to the contents-transferable number of times every check-in when the contents transferred to the device management screen are returned to the library management screen.

According to the above contents management method, contents can easily be written to a device and read therefrom and duplicate contents, which can be recorded on a device, can reliably be managed.

This summary of the invention does not necessarily describe all necessary features so that the invention may also be a sub-combination of these described features.

The invention can be more fully under stood from the following detailed description when taken in conjunction with the accompanying drawings, in which:
FIG. 1 is a block diagram schematically showing a configuration of the overall contents management apparatus in a computer according to an embodiment of the present invention;
FIG. 2 is a block diagram showing details of a contents assisted management system of the contents management apparatus shown in FIG. 1;
FIG. 3 is a diagram showing an example of the structure of a storage region of each medium;
FIG. 4 is a block diagram showing an example of the internal structure of a PD (recording and reproduction device);
FIGS. 5A to 5C are diagrams explaining the features of three different storage mediums;
FIGS. 6A to 6C are diagrams each showing a recording form of a check-in/check-out list to be stored in a secret area of the contents assisted management system;
FIG. 7 is a diagram explaining the recording contents of a storage medium after check-in;
FIGS. 8A to 8C are diagrams each showing another storage example of the check-in/check-out list to be stored in the secret area of the contents assisted management system;
FIG. 9 is a flowchart of check-in/check-out, which shows a procedure from determination of a type of a recording medium to selection of a process corresponding to the type of the recording medium;
FIG. 10 is a flowchart schematically showing a check-in process using a flag;
FIGS. 11A and 11B are diagrams each showing an example of display of a menu in an SD audio player;
FIG. 12 is a view showing an example of display of a screen of the SD audio player in the contents assisted management system;
FIG. 13 is a view showing a play list edit display of an SD library manager;
FIG. 14 is a view showing a PD edit display of the SD library manager;
FIG. 15 is a view showing a PD play list edit display of the SD library manager;
FIG. 16 is a view showing a CD edit display of the SD library manger; and
FIG. 17 is a view showing a file edit display of the SD library manger.

Embodiments of the present invention will now be described with reference to the accompanying drawings.

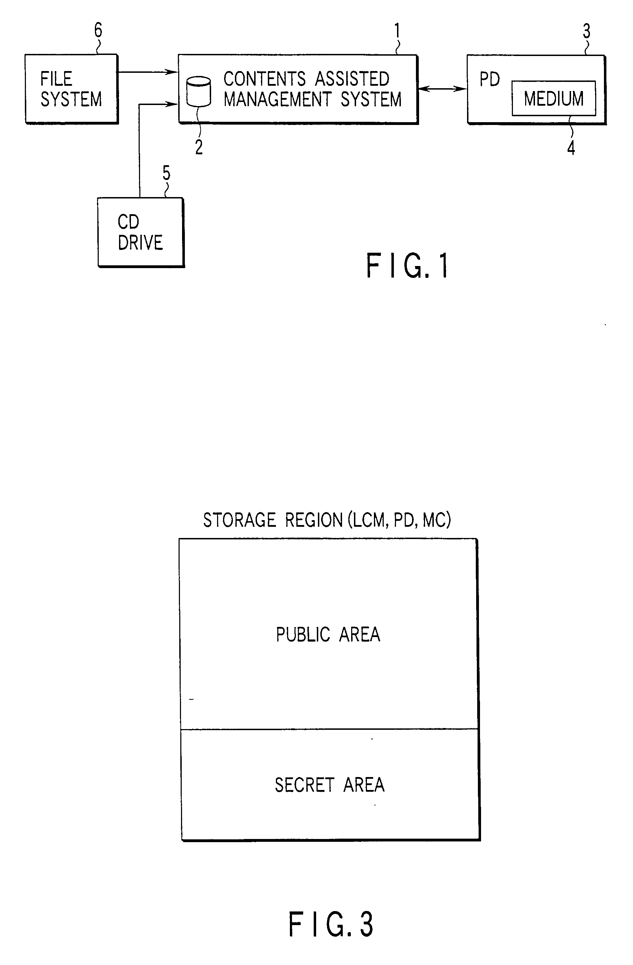

FIG. 1 is a schematic block diagram showing a configuration of the overall contents management apparatus in a computer according to one embodiment of the present invention.

In FIG. 1, reference numeral 1 indicates a contents assisted management system (LCM) that is constituted of a computer such as a personal computer (PC). The system 1 comprises a hard disk (HDD) 2. Various types of application and data are stored in the disk 2. A PD (portable device) 3 serving as a portable recording and reproduction device is connected to the system 1. A medium (MC: memory card) 4, such as an SD (secure digital) card, is provided detachably from the PD 3 as a memory medium. The PD 3 has a function of recording and reproducing contents on and from the medium 4. The medium 4 contains identification information (MID) that is proper to the medium and cannot be rewritten. A contents decryption key that depends upon the medium 4 encrypts the contents stored in the medium 4.

A CD drive 5 and a file system 6 are connected to the contents assisted management system 1. Audio data is stored in a CD (compact disc) set in the CD drive 5. The file system 6 imports file-format audio data from outside through the WEB.

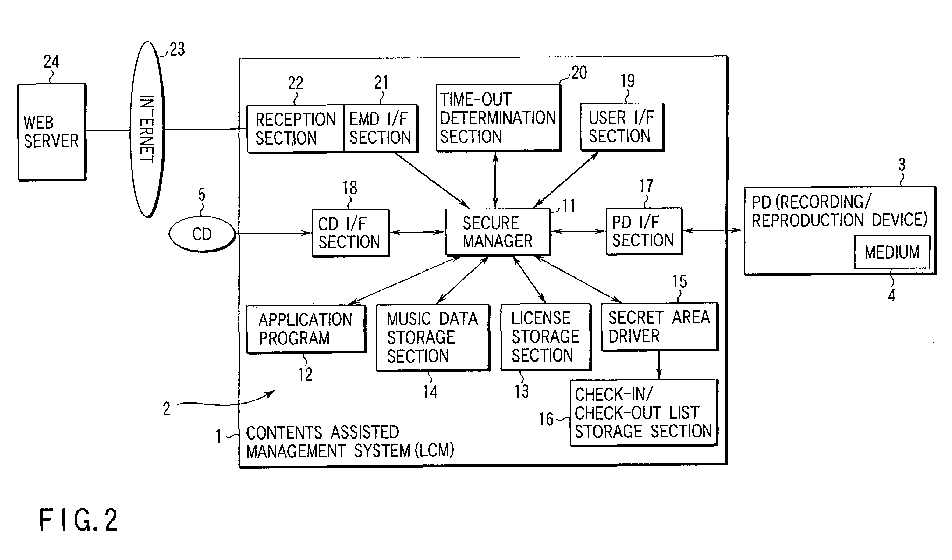

FIG. 2 illustrates details of the contents assisted management system shown in FIG. 1. In this embodiment, music is taken as one example of contents; however, movies or game software can be taken.
Further, the memory card (MC) such as an SD card is used as a medium; however, it can be replaced with other storage mediums such as a floppy disk and a DVD.

The contents assisted management system 1 is able to process various digital contents such as music data and image data. In this system, contents are protected and managed on the premise that the encryption and decryption of contents are managed for each of recording mediums on which the contents are to be recorded, using a medium ID of the recording medium. This aims at allowing the contents to be reproduced even when the same recording medium is used in different personal computers and electronic equipment. The contents are encrypted and recorded using a dedicated medium ID prepared for each recording medium. The management of encryption/decryption of contents using a medium ID is executed by a secure manager 11 as software dedicated thereto. The secure manager 11 is achieved as tamper-resistant software. The tamper-resistant software has a function of protecting contents against unauthorized internal analysis and tampering.

The secure manager 11 works with application programs 12 provided in the hard disk 2 to execute various types of process such as "recording," "reproduction," "copy" and "move" with respect to contents to be protected and managed. The secure manager 11 serves as an SD (secure digital) audio player.

The hard disk 2 includes a license storage section 13, a music data storage section 14, a secret area driver 15, and a check-in/check-out list storage section 16. The PD 3 is connected to the secure manager 11 through a PD I/F (interface) section 17, as is the CD drive 5 through a CD I/F section 18. Moreover, a user I/F section 19 and a time-out determination section 20 are connected to the secure manager 11, as is a reception section 22 through an EMD (electronic music distribution) I/F section 21. The reception section 22 receives encrypted contents or their licenses (a condition of use and a decryption key of the encrypted contents) from a WEB server 24 via the Internet 23. The reception section 22 may have a reproducing function or an accounting function. The reproducing function is used for a test-listen to distributed music contents, while the accounting function is used to purchase favorite contents.

The music contents that a user has purchased are sent to the secure manager 11 via the EMD I/F section 21. If necessary, the music contents are decrypted by the EMD I/F section 21 and subjected to format conversion and re-encryption. Upon receiving encrypted contents, the secure manager 11 stores them in the music data storage section 14 and stores a music data decryption key in the license storage section 13. The secure manager 11 may have a reproducing function. The reproducing function allows the music contents managed by the secure manager 11 to be reproduced on a PC.

The secure manager 11 has a function of supplying contents data to the PD 3. The PD 3 can reproduce contents from the medium 4.

The medium 4 has identification information (MID) that is proper to the medium and cannot be rewritten. A contents decryption key that depends upon the medium 4 encrypts the contents stored in the medium 4. This key is encrypted by an encryption key Kp stored in the PD 3 and then recorded on the medium 4.

The contents and contents decryption key in the medium 4 can be copied onto another storage medium (referred to as MCb hereinafter).
1. Contents are not reproduced from the MCb correctly without using a legitimate PD 3 since only the legitimate PD 3 includes the encryption key Kp; however,
2. Since the identification information MID of the medium 4 cannot be copied, the identification information MID of the MCb differs from that of the medium 4 which is the source of copy, with the result that the contents copied onto the MCb cannot be reproduced correctly. In other words, the duplicate contents recorded on the medium 4 by the secure manager 11 are inhibited from being copied to other MCs one after another and then utilized.

Check-in/check-out will now be described in accordance with the contents assisted management system 1 shown in FIG. 2.

The term "check-out" means that the system 1 stores contents as "parent" and copies their duplicates onto the medium 4 as "child" contents. While the "child" contents can freely be reproduced by the PD 3, no "grandchild" contents can be reproduced from the "child" contents. The number of "children" generated from the "parent" is defined as an attribute of "parent." The term "check-in" means that the system 1 writes the "child" contents of the medium 4 back to the "parent" contents or erases them (or prevents them from being used), with the result that the "parent" contents in the system 1 recover the right to make one "child." This is also called check-in at "parent."

Next, the check-in/check-out and the means for managing recording of contents on the medium 4 through a network will be described in the order of items presented below.
1. Check-in/check-out
   (1-1) Check-in/check-out
   (1-2) Check-in/check-out of duplicate contents using an MC of level 2
   (1-3) Another method of managing duplicate contents using a check-in/check-out list
   (1-4) Reproduction of duplicate contents stored in the MC of level 2
   (1-5) Check-in/check-out and reproduction of duplicate contents using an MC of level 1
   (1-6) Check-in/check-out and reproduction of duplicate contents using an MC of level 0
2. Means for managing recording of duplicate contents on an MC through a network
3. Secret area (check-in/check-out)

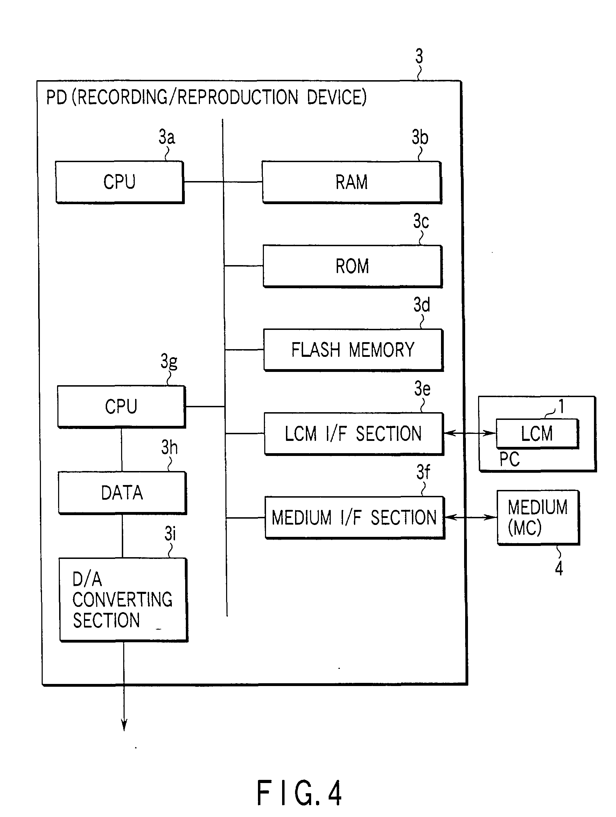

In order to achieve check-in/check-out, the storage region of the medium 4 includes an area where neither reading nor writing is permitted by a disclosed procedure (secret area), and information necessary for decryption of contents is recorded in the secret area (see FIG. 3). The storage region of the contents assisted management system 1 (e.g., a secret area on the hard disk 2 that can be accessed only by an undisclosed procedure when the system 1 is constituted of a PC) includes a check-in/check-out list storage section 16, and a check-in/check-out list, as will be described later, is stored in the section 16 (see FIG. 3). Furthermore, the storage region of the PD 3 includes an area that can be accessed only by an undisclosed procedure (secret area), and information necessary for decryption of contents can be recorded in the secret area (see FIG. 3). The area of the storage region other than the secret area, which can be accessed by a normal procedure, is called a public area.

The secret area of the contents assisted management system 1 shown in FIG. 2 includes the secret area driver 15 and check-in/check-out list storage section 16. The secret area driver 15 is designed to read data from the secret area after the secure manager 11 executes a secret specific procedure for accessing the check-in/check-out list storage section 16.

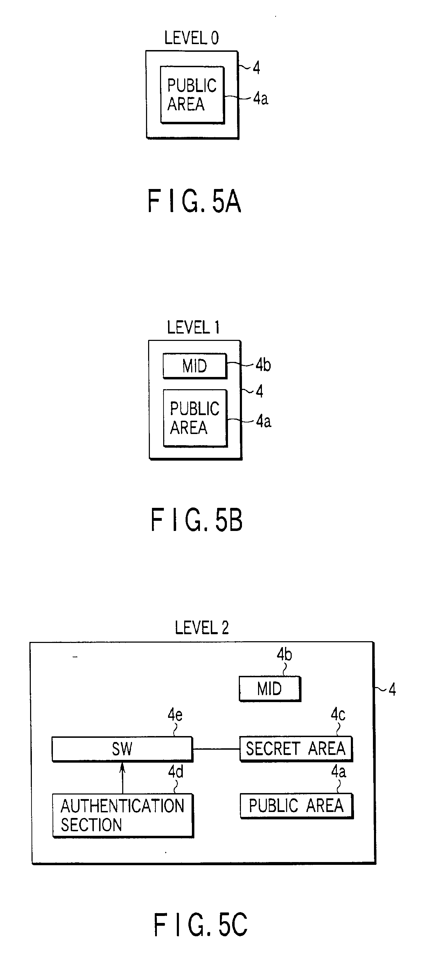

As FIG. 5C shows, the medium 4 includes a public area 4a, an identification information storage section 4b, a secret area 4c, an authentication section 4d and a switch (SW) 4e. The identification information storage section 4b stores identification information MID that cannot be rewritten or copied from outside. The authentication section 4d authenticates a user whenever the user accesses the secret area 4c. If the user is identified as an authorized person, the switch 4e opens a gate such that the user can access the secret area 4c. There are three types of medium 4 that can be applied to the embodiment of the present invention. The type of medium 4 including both the identification information MID and secret area, as shown in FIG. 5C, is referred to as level 2. The type of medium 4 having not a secret area but identification information MID, as shown in 5B, is referred to as level 1. The type of medium 4 having neither a secret area nor identification information, as shown in 5A, is called level 0. For example, the level 0 can be distinguished from the other levels by the presence and absence of identification information MID, and the levels 1 and 2 can be distinguished from each other by the structure of identification information MID. When identification information is consecutive numeric values, if it is not smaller than a given value, the type of medium 4 is level 2.

The medium 4 will now be described taking level 2 as an example.

The medium 4 can be set in the PD3 connected to the contents assisted management system 1 or set in the system 1 directly.

FIG. 4 illustrates an example of the structure of the PD 3. The PD 3 comprises a CPU 3a, a RAM 3b, a ROM 3c, a flash memory 3d, an LCM I/F (interface) section 3e, a medium I/F (interface) section 3f, a decoding section 3g, a decoder 3h, and a D/A converting section 3i. The medium 4 is set in the medium I/F section 3f. When the contents assisted management system 1 reads/writes information from/to the medium 4 through the PD 3, it accesses a secret area of the medium 4 via a secret area access section of the PD 3. The medium I/F section 3f includes a secret area access section for accessing the secret area of the medium 4.
The secret area of the PD 3 can be formed in the flash memory 3d. The ROM 3c stores programs for authentication between the ROM 3c and the medium 4 and for distinguishing the types of medium 4. In accordance with these programs, the authentication and distinction are executed under the management of the CPU 3a.

Next, the check-in/check-out list stored in the secret area of the contents assisted management system 1 will be described.

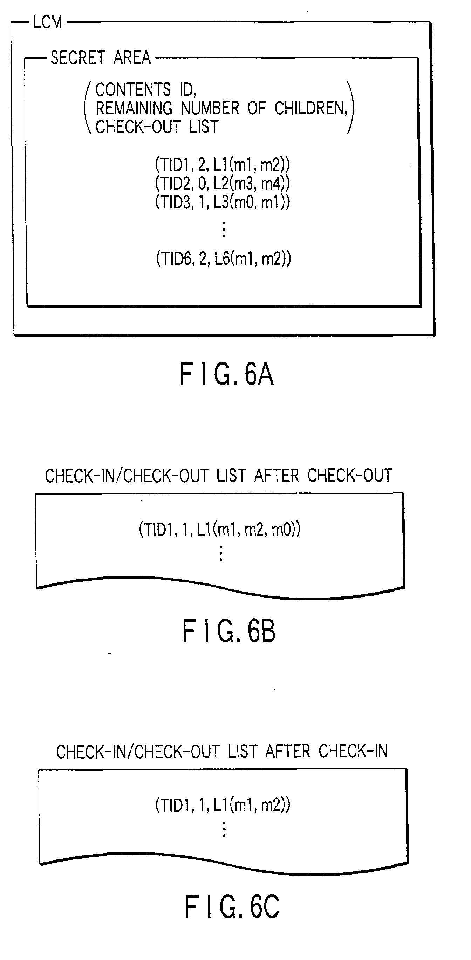

All music contents held in the secure manager 11 have a contents ID (TID), which is identification information for identifying the respective contents, a predetermined number of contents to be duplicated or the remaining number of "children," and a check-out list as attribute information. This attribute information is called a check-in/check-out list.
The check-in/check-out list is recorded in the check-in/check-out list storage section 16 in the secret area as shown in FIG. 6A.

In FIG. 6A, the remaining number of "children" for contents ID "TID1" is 2 and the check-out list thereof is L1.

The check-out list is a list of identification information of the medium 4 on which duplicate contents (children) are recorded. As is seen from FIG. 6A, "child" contents of contents ID "TID1" are check out at two mediums 4 having identification information of ml and m2 in the check-out list L1.

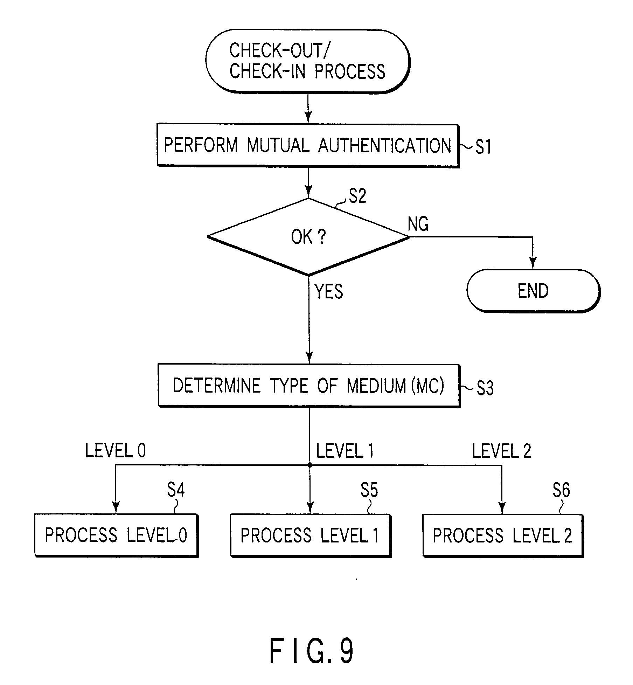

As shown in the flowchart in FIG. 9, when the medium 4 is set in the PD 3, mutual authentication is performed between them (step S1). When each of two parties determines that the other is legitimate (step S2), the PD 3 determines the type of medium 4 based on identification information MID read by the medium 4 (step S3).

When the type of medium 4 is level 0, a process of level 0 is performed (step S4). When the type is level 1, a process of level 1 is done (step S5).

Since the type of medium 4 is level 2, the PD 3 executes a check-in/check-out process according to the type (step S6).

As FIG. 6B shows, the secure manager 11 subtracts "1" from the remaining number n of children of contents of contents ID "TID1" to which a check-out request was made, and adds identification information "m0" of the medium 4 to the check-out list L1.

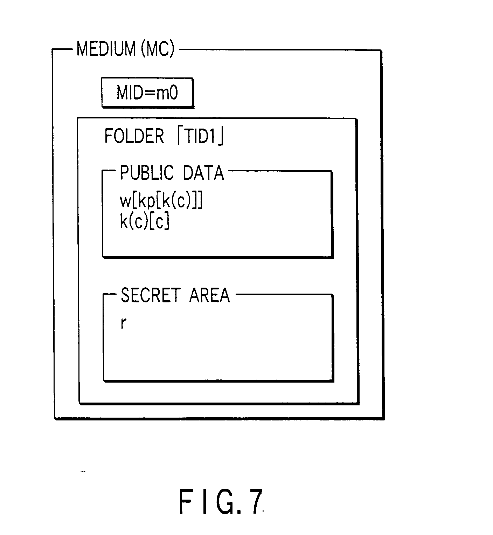

The storage contents of the medium 4, which is obtained when the above process is completed, are illustrated in FIG. 7.

FIG. 6C illustrates the status of the check-in/ check-out list when a check-in process is executed. In the check-in process, the secure manager 11 adds "1" to the remaining number n of children of contents of contents ID "TID1" to which a check-in request was made, and deletes identification information "m0" of the medium 4 from the check-out list L1.

A case where each of contents has a check-out attribute flag f such that a copyright holder can management a check-in at another contents assisted management system 1, will now be described.

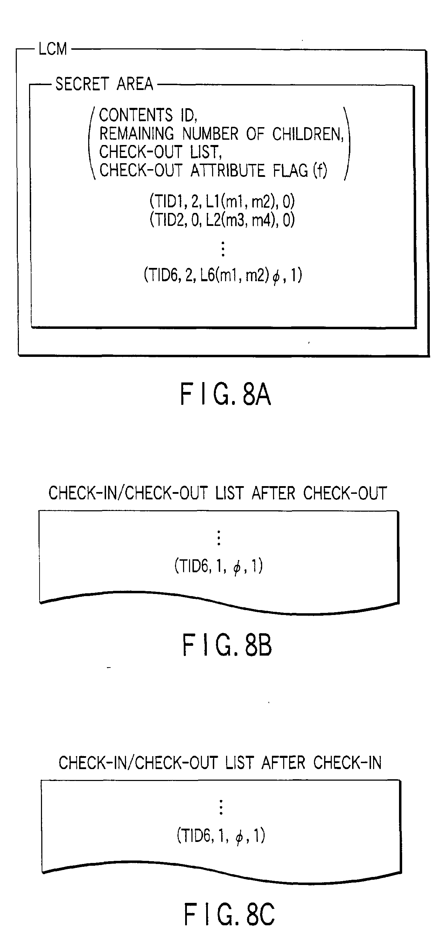

FIG. 8A shows a format of the check-in/check-out list included in the contents assisted management system 1 in the above case.

As shown in FIG. 8A, a contents ID, the remaining number of children, a check-out list, and a check-out attribute flag f are registered in the check-in/check-out list of each content.

When the flag f is "1," the contents can check out and check in at another contents assisted management system 1. When the flag f is "0," the contents cannot at least check in at another contents assisted management system 1.

Let us consider that the contents of contents ID "TID6" check out. First, the secure manager 11 checks the check-in/check-out list to confirm that the check-out attribute flag of the contents is "1." When the flag is "0," the contents do not check out at this contents assisted management system 1. When the flag is "1," the secure manager 11 subtracts "1" from the remaining number of children in the check-in/check-out list of contents ID "TID6" so that the number of remaining children is now "1" (see FIG. 8B). The check-out list L6 is empty (indicated by symbol φ) and the flag f is "1." The contents can check in at the contents assisted management system 1 provided on another PC. No check-out list is therefore required. The flag f is recorded in the secret area of the medium 4 together with random numbers r.

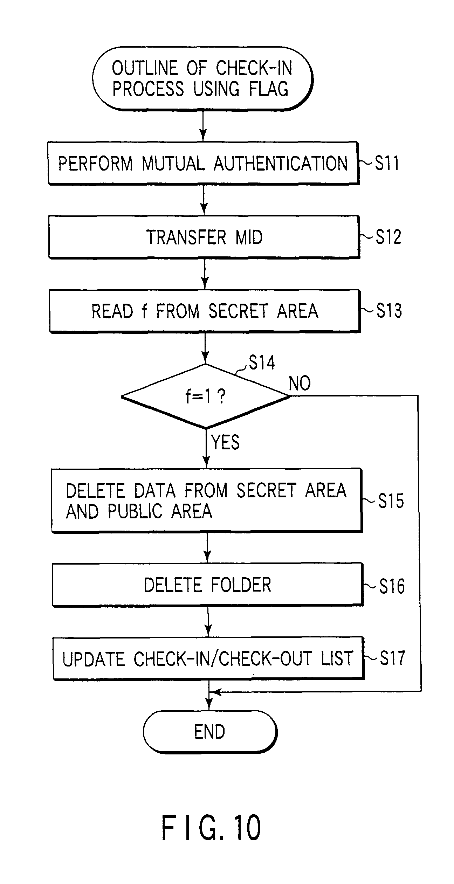

A case of check-in at a contents assisted management system which is the same as or different from the contents assisted management system 1 at which the contents of contents ID "TID6" checks out, will now be described with reference to the flowchart shown in FIG. 10.

Authentication is performed between the medium 4 and the contents assisted management system 1 (step S11). Identification information MID is acquired from the medium 4 (step S12).

The secure manager 11 executes the foregoing procedure for the secret area 4c of the medium 4 (the legitimacy of both is confirmed by the mutual authentication and the switch 4e opens a gate to the secret area 4c) irrespective of whether the contents to which a check-in request was made are listed on the check-in/check-out list, and reads a flag f out of the secret area 4c (step S13). When the flag f is 1 (step S14), data is deleted from the secret area and the public area (step S15), a folder is deleted (step S16), and the check-in/check-out list is updated (step S17). When the flag f is 0, the process ends. Finally, when the contents are not registered on the check-in/check-out list, a new check-in/check-out list (TID6, 1, *ø*, 1) in which the remaining number of children of the contents is "1" is registered. When the contents are registered on the check-in/check-out list, "1" is added to the remaining number of children of the contents (step S17).

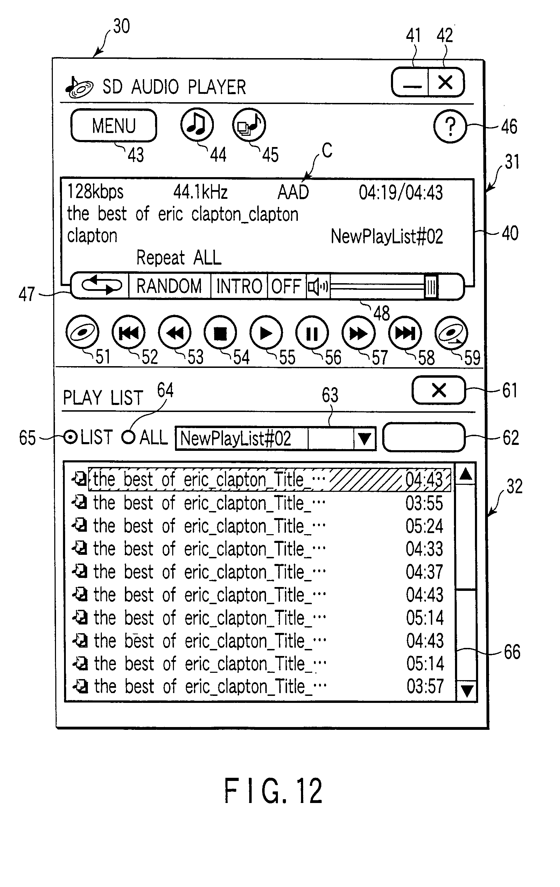

A process operation of the contents assisted management system 1 will now be described specifically. When the secure manager 11 of the system 1 starts, an SD audio player 30 is displayed on the screen of a display device (not shown) of the system 1, as illustrated in FIG. 12. The display screen of the SD audio player 30 includes a player window 31 and a play list window 32.

The player window 31 has a playback state display window 40 in its central part. The window displays a song title, a play list, an artist, a playback position (time), a sampling frequency, a bit rate, a format type, a special playback mode, and the like. Above the playback state display window 40, there are a minimization button 41 for holding a program in a task bar, an exit button 42 for exiting a program, a menu button 43 for displaying a menu, a manager window display button 44 for turning on/off a management window, a play list display button 45 for turning on/off the play list window 32, and a help button 46.

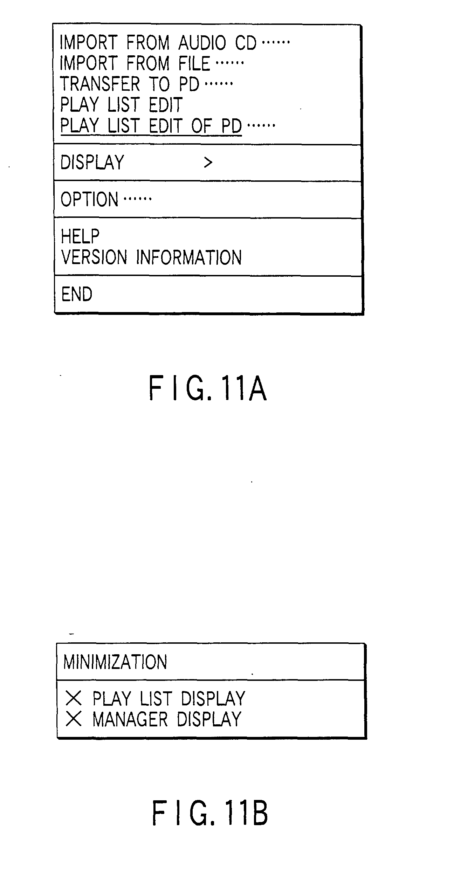

When the menu button 43 is pressed or clicked by a mouse, a main menu is displayed as shown in FIG. 11A. The main menu contains "Import from Audio CD ···," "Import from File ···," "Transfer to PD ···," "Play List Edit ···," "Play List Edit of PD ···," "Display >," "Option ···," "Help," "Version Information," "Exit" and the like. When a cursor moves to the position of "Display >" in the above menu, a display menu containing "minimization," "Play List Display" and "Manager Display" is displayed. In this case, a check area is added to the head of each of "Play List Display" and "Manager Display."

The "minimization" aims at holding the current state in a task bar as it is. The "Play List Display" aims at displaying the play list window 32 when a check mark is present and closing it when a check mark is absent. The "Manager Display" aims at displaying the management window when a check mark is present and closing it when a check mark is absent.

A playback mode designation button group 47 is provided under the playback state display window 40. The group 47 contains buttons for selecting a special playback mode from among REPEAT, RANDOM and INTRO, an OFF button for clearing the selected special playback mode, and a volume slider bar 48 for adjusting the volume of sound when music data is reproduced.

Whenever a user clicks the REPEAT button of the group 47, he or she selects one from among the modes of REPEAT, REPEAT ALL and REPEAT PLAY LIST. The REPEAT means playing back a designated tune over and over again. The REPEAT ALL means playing back from the current tune to the last tune through a play list, returning to the first tune of a first play list, and continuing the playback again. This playback continues until a user gives an instruction. The REPEAT PLAY LIST means continuing a playback of all tunes in a play list until an instruction to stop the playback is provided.

When a user clicks the RANDOM button, he or she can switch between RANDOM PLAY LIST and RANDOM ALL. The RANDOM PLAY LIST is a mode for randomly playing back tunes in a play list. The RANDOM ALL is a mode for randomly playing back tunes of all play lists. Clicking the INTRO button, the user can select an intro playback and, in this case, the beginning of each of tunes of all play lists is reproduced for five seconds. The volume slider bar 48 is used to adjust the volume of sound when music data is reproduced.

Under the playback mode designation button group 47 and the volume slider bar 48, there are a play list move (forward) button 51, a backward skip button 52, a fast-rewind button 53, a stop button 54, a play button 55, a pause button 56, a fast-forward button 57, a forward skip button 58, and a play list move (backward) button 59.

The play button 55 is used to reproduce contents. When the player stops, the button 55 allows the currently-selected contents to be reproduced from the beginning. When the player pauses, the button 55 continues a playback of contents. In a fast-forward/ fast-rewind mode, the button 55 restores it to a normal play mode. When a user selects one of tunes in a play list, the button 55 reproduces the selected tune. If there is another tune in the play list, then it is reproduced. When a playback of the last tune in the play list is completed, a first tune in the next play list is reproduced.

When any one of the REPEAT, PLAY LIST REPEAT, REPEAT ALL, RANDOM PLAY LIST, RANDOM ALL and INTRO is selected, a playback is performed in accordance with the selected mode.

The play list move (backward) button 59 aims at moving between play lists. During the playback, the button 59 produces a first tune in the next play list. During the halt of the player, the button 59 only displays information of a first tune in the next play list and does not reproduce it. The button 59 does not operate during the reproduction or selection of the last play list.

The play list move (forward) button 51 aims at moving between play lists. During the playback, the button 51 produces a first tune in the preceding play list. During the halt of the player, the button 51 only displays information of a first tune in the preceding play list and does not reproduce it. The button 51 does not operate during the reproduction or selection of the last play list.

The stop button 54 stops each of playback, fast-forward/fast-rewind, and pause operations to stop the SD audio player.

The pause button 56 stops each of playback and fast-forward/fast-rewind operations to stop the SD audio player.

The fast-forward button 57 shifts an operation from each of playback and pause operations to a fast-forward operation. This button cannot be used when the player stops.

The fast-rewind button 53 shifts an operation from each of playback and pause operations to a fast-rewind operation. This button cannot be used when the player stops, either.

The forward skip button 58 reproduces the next tune from the beginning in play mode.

The backward skip button 52 reproduces the preceding tune from the beginning in play mode.

The play list window 32 is designed to display a play list and select and reproduce a tune from the play list. The window 32 has an exit button 61 in its upper right end portion. In the row under the exit button 61, the window 32 includes an ALL music/play list radio button 62, a playback state display window 63, an ALL display light 64, and a LIST display light 65. The window 32 also has a play list component box 66 thereunder.

The ALL music/play list radio button 62 allows "ALL" or "PLAY LIST" to be selected as a method of displaying contents. After the player starts, the LIST display light 65 corresponding to the "PLAY LIST" is selected. When the "ALL" is selected, the play list component box 66 is impossible to operate.

The play list component box 66 is effective only when "PLAY LIST" is selected by the radio button 62. If "ALL" is selected, the box 66 displays the titles of all songs registered in a library in alphabetical order as a contents list. When "PLAY LIST" is selected, the box 66 displays songs of the selected play list in playback order. In either case, if a user double-clicks a song by a mouse or the like, the song is considered to be the current one and displayed on the reproduction state display window 63. The subsequent reproduction-is performed in the same manner as the normal reproduction of the play list. After all songs of the same play list are reproduced, the reproduction moves to the next play list. However, when "ALL" is selected, only one song is reproduced and the player stops. In random reproduction, the song is considered to be a first one and then the other songs are reproduced randomly.

The currently-reproduced song is displayed on the play list component box 66. A user can thus know the reproduction position visually.

The management window, which is displayed by the menu button 43 or the manager window display button 44 in the player window 31, will now be described.

### [Play List Edit]

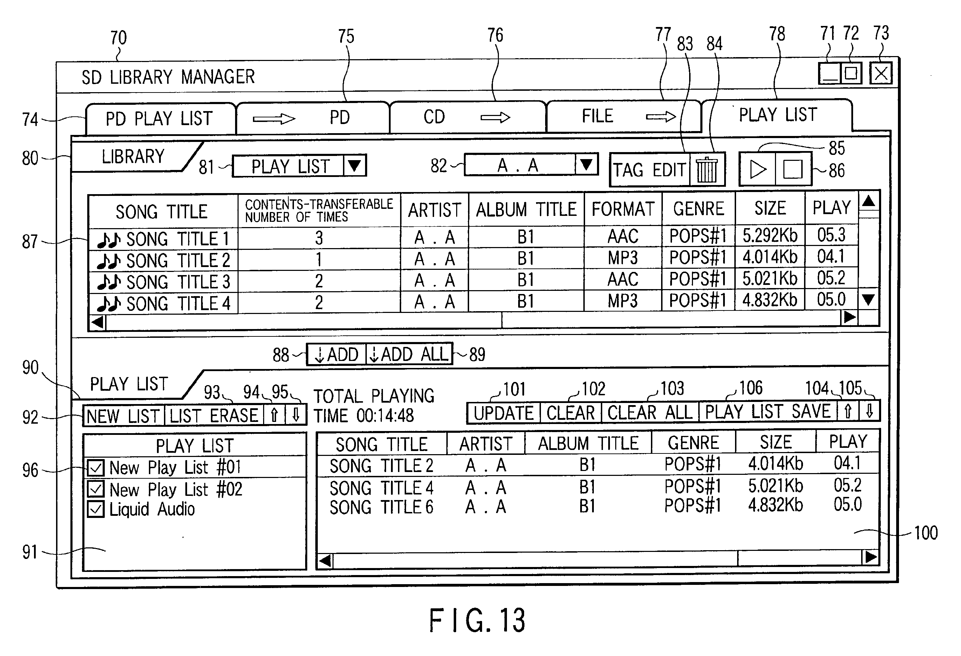

FIG. 13 shows an example of a display screen of an SD library manager in the play list edit mode of the management window 70. The management window 70 includes a minimization button 71, a maximization button 72 and an exit button 73 for exiting a program in its upper right end portion. The window 70 also includes a library display section 80 in its central part. The section 80 is designed to display a library for each library storing song data, and a tag is stuck to the device. As the tag, there can be provided a PD play list tag 74 for displaying a play list edit screen of the PD 3, a PD tag 75 for displaying an edit screen of the PD 3, a CD tag 76 for displaying an edit screen of a CD, a file tag 77 for displaying an edit screen of a song in file format, and a play list tag 78 for displaying an edit screen of a play list. By clicking these tags 74 to 78, their corresponding edit screens are displayed.

When a user clicks the play list tag 78, data is read out of the music data storage section 14 of the hard disk 2 and the edit screen of the play list is displayed as shown in FIG. 13.

The management window 70 includes a play list display section 90 in addition to the library display section 80 on the play list edit screen. The section 80 has a retrieval condition setting section 81, a retrieval key setting section 82, a tag edit button 83, an erase button 84, a play button 85, a stop button 86, and a library list display section 87. An add button 88 and an add-all button 89 are provided under the section 87.

The above retrieval condition setting section 81 is capable of retrieval from an artist, an album and a play list. If a user chooses a condition for retrieval by the section 81 and chooses a retrieval key by the section 82, the music data storage section 14 is searched for desired contents, and only the contents are listed on the library list display section 87. The display section 87 displays music data read from the music data storage section 14 or an icon, the contents-transferable number of times (the number of times the contents can be copied), a song title, an artist, an album title, a format, a genre, a file size, performance time, etc.

The uppermost song of the currently-selected contents can be managed by the play button 85 and stop button 86. During the play of the song, the player window 31, shown in FIG. 12, displays information of the song.

The erase button 84 allows contents to be erased in the display except the play list display, but it cannot be used in the play list display. When a user clicks the erase button 84, a warning dialog such as "Are you sure? The erased song cannot be restored." is displayed. If the user certainly wishes to erase the currently-selected contents, they are erased. The tag edit button 83 reads a tug edit screen (not shown) to edit tug information such as an audio type, a bit rate, a copyright, a song title, an artist name, an album title, a composer, a lyric writer, lyrics, and a genre.

The play list display section 90 includes a play list box 91 and a contents list display section 100. The display section 90 also includes a new list button 92, a list delete button 93, a play list up button 94, and a play list down button 95, which correspond to the play list box 91. The new list button 92 prepares a new play list called "New Play List #01" (the number increases) and displays and edits a confirmation dialog of a play list name. The list delete button 93 erases the currently-displayed play list after the confirmation dialog is displayed. The play list up button 94 and play list down button 95 moves the play order of a selected play list up and down. The order can also be moved by a mouse in the list.

In the play list box 91, a play list can be chosen from a retrieval directory. A check box 96 is displayed at the head of the play list in order to confirm whether the play list is to be played or not. Only the checked play list is played on the player window 31. If a user edits a chosen play list and chooses another play list without storing the former, the play list box 92 displays a play list close dialog and asks the user whether he or she wishes to store it. The same operation is performed while a new play list is being edited. The name of a play list can be edited by clicking a mouse.

The play list display section 90 includes an update button 101, a clear button 102, an all-clear button 103, a play list save button 106, a contents up button 104, and a contents down button 105, which correspond to the contents list display section 100. The update button 101 inquires the current status of the music data storage section 14 again to display the current status. The clear button 102 clears the selected contents, while the all-clear button 103 clears all contents displayed on the contents list display section 100. No dialogue is displayed to confirm whether the contents are cleared or not. The contents up button 104 and contents down button 105 moves the play order of selected contents up and down. The order can also be moved by a mouse in the list. The play list save button 106 catalogues an edit content in the currently-edited play list.

On the play list edit screen shown in FIG. 13, a user selects contents from the library list display section 87 and clicks the add button 88. Thus, the selected contents are added to the play list selected in the play list box 91 and displayed on the contents list display section 100. If the user edits the play list as described above and then clicks the play list save button 106, the play list displayed on the play list display section 90 is saved in the music data storage section 14. On the above play list edit screen, a play list can be prepared to arrange song data stored in the music data storage section 14 and the song data can be moved to the play list.

### [PD Edit]

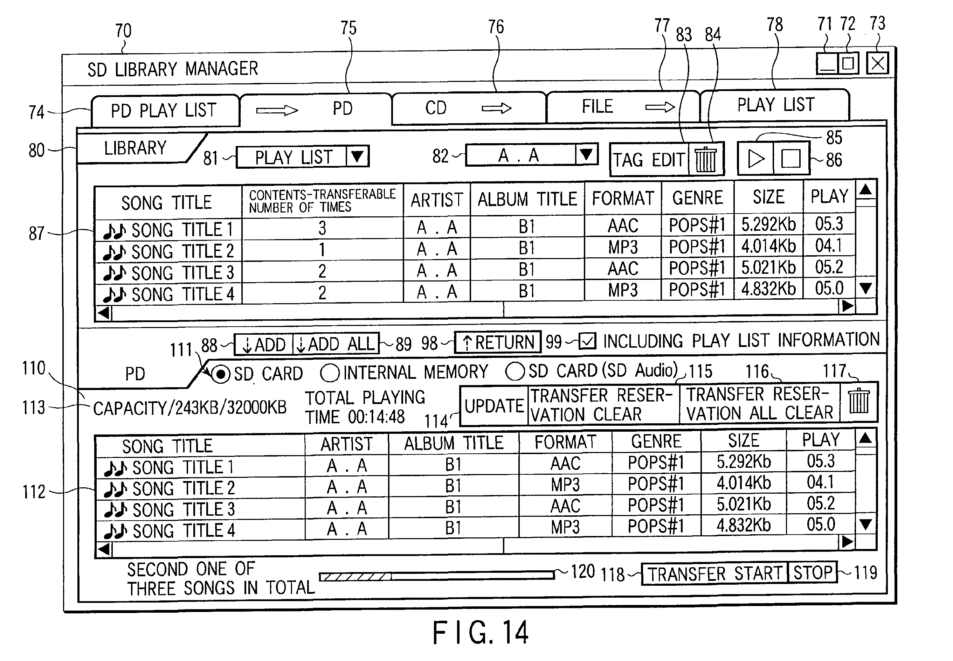

When a user clicks the PD tug 75 on the management window 70 illustrated in FIG. 13, the window switches to the PD edit screen shown in FIG. 14. The PD edit screen includes a library display section 80 and a PD display section 110, and designates a song to be moved to the medium 4 such as an SD card set in the PD 3 and gives an instruction to transfer the song.

The library display section 80 has substantially the same structure as that of the library display section of the play list edit. However, the section 80 of the PD edit has in its lower part a return button 98 and a check box 99 containing play list information in addition to the add button 88 and the add-all button 89.

The add button 88 registers the current library or the contents selected by the library list display section 87 in the list as a candidate to be transferred to the PD 3. The add-all button 89 registers all contents, which are currently displayed on the display section 87, in the list as a candidate to be transferred to the PD 3. The return button 98 is used to return the contents selected by a PD contents list display section 112 to the library. The check box 99 containing play list information is operable when the library retrieval conditions are effective in the play list, and becomes gray and inoperable at the other times. If a transfer candidate is added when a play list is checked, the currently-displayed play list can also be transferred to the PD3.

The PD display section 110 includes a medium select section 111 and a PD contents list display section 112. The medium select section 111 allows a destination medium to be selected from among an SD card, an internal memory and an SD audio card. When the SD audio card is selected, only the file in AAC format can be transferred thereto. The PD display section 110 also includes a capacity display section 113, an update button 114, a transfer reservation clear button 115, a transfer reservation all-clear button 116, and an erase button 117 above the PD contents list display section 112. The capacity display section 113 displays a file capacity/a total medium capacity of selected contents.

The update button 114 inquires the current status from the PD 3 again and displays it. The transfer reservation clear button 115 clears contents, which are selected as a candidate to be transferred, from the list, but the contents themselves are left. The transfer reservation all-clear button 116 clears all contents, which are selected as candidates to be transferred, from the list, but the contents themselves are left. The erase button 117 is used to erase the selected contents after it confirms that a user wishes to erase them.

The PD display section 110 includes a progress status display section 120 as well as a transfer start button 118 and a stop button 119 under the PD contents list display section 112. The transfer start button 118 is used to actually transfer the contents, which are selected and displayed in gray on the PD contents list display section 112, to the PD 3. The transfer of the contents is stopped when a play list is transferred. The stop button 119 is effective only during the transfer of contents and used to stop the transfer. When the transfer is stopped, the contents that have been already transferred are registered as they are, but no files are created for the contents suspended during the transfer thereof. The progress status display section 120 displays the progress status of transfer on a progress bar that indicates how many songs have been transferred.

When a user clicks the add button 88 or add-all button 89 to add the contents displayed on the library list display section 87 to the PD contents list display section 112 on the PD display screen described above, the contents-transferable number of times displayed on the list of the section 87 is decreased by one through the foregoing check-out process. When the largest contents-transferable number of times is four, "3" is displayed first as the number and then "2", "1" and "0" are displayed in that order because the number is decreased by one every time contents are transferred.

Conversely, when a user clicks the return button 98 to return the contents displayed on the PD contents list display section 112 to the library list display section 87, the contents-transferable number of times is increased by one through the check-in process described above.

### [PD play list edit]

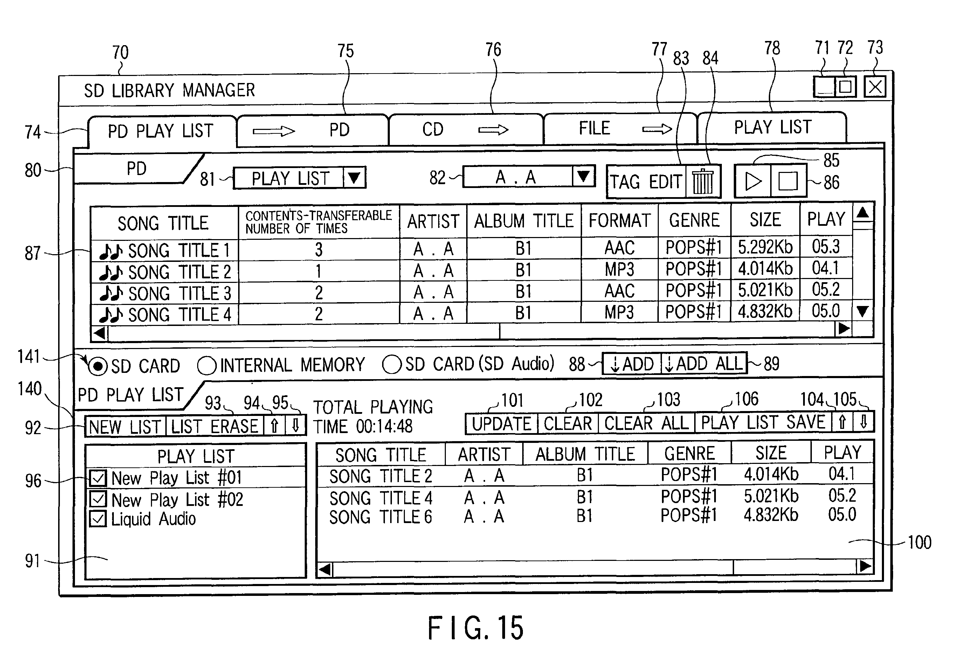

When a user clicks the PD play list tag 74 on the display screen of the library manger described above, the display screen is switched to the PD play list display screen shown in FIG. 15. The PD play list display screen includes a PD library display section 130 and a PD play list display section 140. Like the library display section 80, the PD library display section 130 has a retrieval condition setting section 81, a retrieval key setting section 82, a tag edit button 83, an erase button 84, a play button 85, a stop button 86, and a library list display section 87. An add button 88 and an add-all button 89 are provided under a component box 137.

The PD play list display section 140 includes a medium select section 141 and, like the play list display section 90 shown in FIG. 13, it also includes a play list box 91 and a contents list display section 100. The medium select section 141 allows a user to select a medium to be edited from among an SD card, an internal memory, and an SD audio card. However, a play list cannot be created bridging all of these mediums. Only the contents of the selected medium are displayed on the PD library display section 130 and PD play list display section 140.

The PD play list display section 140 also includes a new list button 92, a list delete button 93, a play list up button 94, and a play list down button 95, which correspond to the play list box 91.

The display section 140 also includes an update button 101, a clear button 102, an all-clear button 103, a play list save button 106, a contents up button 104, and a contents down button 105, which correspond to the contents list display section 100.

When a user selects any one of the SD card, internal memory and SD audio card by the medium select section 141 on the display screen of the above PD play list, the recording contents of the selected medium are read out and displayed on the PD library display section 130 and PD play list display section 140. The user can create a new play list (#1 ···) by clicking the new list button 92 of the section 140 on the above display screen and add an arbitrary song, which is selected from the library list display section 87, to the new play list. The user can also click the list delete button 93 to delete the selected play list.

If, moreover, the user clicks the clear button 102 and all-clear button 103, he or she can clear the selected song or all songs at once.

After the user edits the play list, he or she clicks the play list save button 106 to register the edited contents in the currently-edited play list.

### [CD edit]

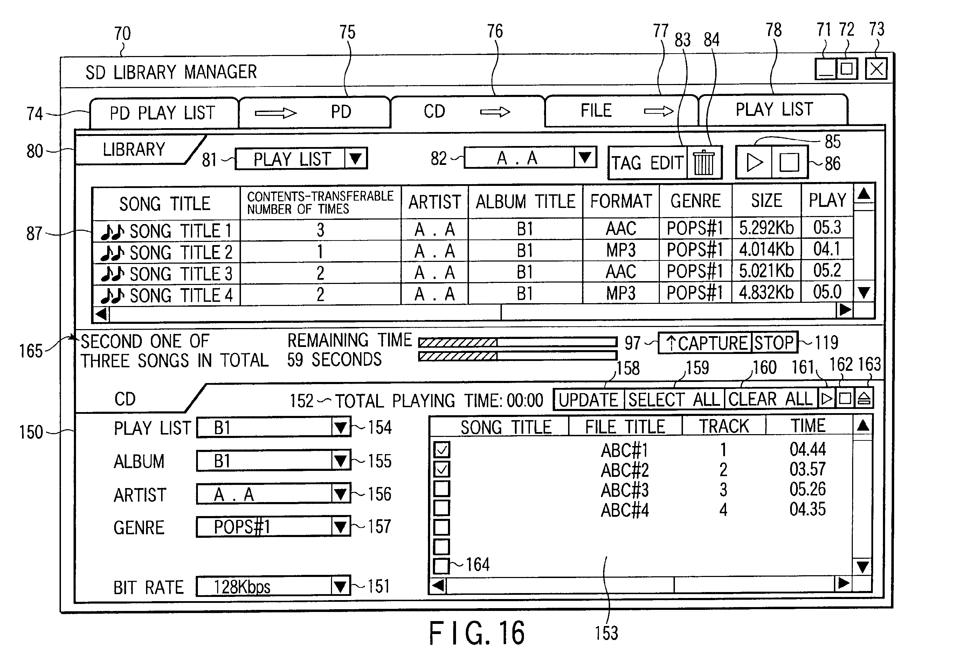

When a user clicks the CD tag 76 on the display screen of the management window 70 described above, the screen is switched to the display screen displaying song data of a CD as shown in FIG. 16. The CD display screen includes a library display section 80 and a CD-ROM drive display section 150. The section 80 is the same as that of the play list edit screen illustrated in FIG. 13. The library display section 80 has a library list display section 87, and both a import button 97 and a stop button 119 are provided under the section 87. The CD display screen allows a user to only add contents to the library display section 80 from the CD by clicking the import button 97 on the CD display screen. The import button 97 thus starts to import contents of a check box 164 that is checked. The stop button 119 is effective only during the import of contents and used to stop the import operation. The contents that have been already transferred when the import is stopped, are registered as they are. No files are created for the contents suspended during the import thereof.

The CD-ROM drive display section 150 includes a bit rate select section 151, a total playing time display section 152, a progress status display section 165, a track list display section 153, a play list component box 154, an album title component box 155, an artist name component box 156, a genre component box 157, an update button 158, an all-select button 159, an all-clear button 160, a play button 161, a stop button 162, and an eject button 163.

The bit rate select section 151 is capable of selecting and designating one for encoding from among a plurality of bit rates. The total playing time display section 152 displays the total playing time of a selected track.

The track list display section 153 displays a selecting check box 164 for each track, together with a song title, a track number, playing time, and a file name. A user can fill a blank with song titles and edit them by clicking a mouse. If the user checks the check box 164, its corresponding contents are selected as an object to be imported and the total playing time is updated.

The play list component box 154 allows a user to select a play list of the imported contents that the user wishes to register. The selected information is effective but inhibited from being converted during the import. A user can choose a new play list or an existent play list from the list displayed on the play list component box 154. If the user chooses the new one, he or she can edit a name of the play list. The play list is thus created when the import process starts.

A user can input an album title to be registered as tag information in the album name component box 155. The input information is effective but inhibited from being converted during the import. Neither edit nor selection can be performed in the box 155 when the apparatus starts for the first time.

A user can input an artist name to be registered as tag information in the artist name component box 156. The input information is effective but inhibited from being converted during the import.

A user can input a genre to be registered as tag information in the genre component box 157. The input information is effective but inhibited from being converted during the import. In order to help user's input, a genre such as pops, rock, hard rock, classical music, jazz, fusion, new music, hip-hop, blues, and traditional-style Japanese popular songs, is registered in advance.

The update button 158 is used to confirm the contents of a medium since there is a case where the displayed track information and the actual audio CD information are caused to differ from each other by inserting the medium again.

The all-select button 159 is used to put check marks in the check boxes 164 of all tracks displayed on the track list display section 153. The all-clear button 160 is used to remove the check marks from all tracks displayed on the track list display section 153.

The play button 161 reproduces a specified track, and its reproduction information is displayed on the player window 31. The stop button 162 stops the reproduction.

The eject button 163 opens/closes a tray of the currently-selected drive.

The CD-ROM drive display section 150 of the above CD display screen displays songs stored in a CD-ROM (CD disc) set in the CD drive 5 shown in FIG. 2. A user can thus select an arbitrary song and click the play button 161 to play the selected song. The user can also select a track list displayed on the track list display section 153 and click the import button 97 to import it into a library. The imported track list can be displayed on the library display section 80 and its corresponding song can be moved to an arbitrary medium (a file) through the above operation.

### [File edit]

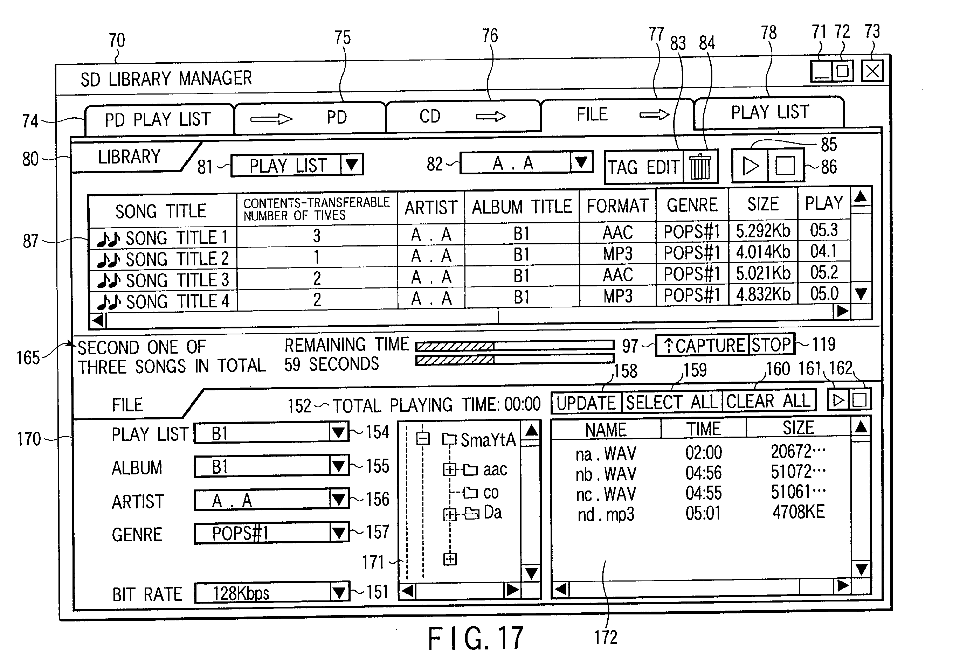

When a user clicks the file tag 77 on the display screen of the management window 70, the display screen is switched to a file edit display screen as shown in FIG. 17. This file edit display screen displays songs in file format and is used to arrange song data, which is imported from outside via the WEB by the file system 6 shown in FIG. 1, and store it in a library or the music data storage section 14 of the hard disk 2.

The file edit display screen includes a library display section 80 and a file select section 170. The library display section 80 is the same as that of the CD edit shown in FIG. 16.

Like the CD-ROM drive display section 150 shown in FIG. 16, the file select section 170 includes a bit rate select section 151, a total playing time display section 152, a progress status display section 165, a play list component box 154, an album title component box 155, an artist name component box 156, a genre component box 157, an update button 158, an all-select button 159, an all-clear button 160, a play button 161, and a stop button 162. The functions of these elements are the same as those in the CD edit described above and thus their descriptions are omitted.

The file select section 170 also includes a folder display section 171 and a file list display section 172.

The folder display section 171 displays folders stored in the hard disk 2. When a user selects a folder displayed on the section 171, the file list display section 172 displays files of the selected folder. The section 172 displays a selecting check box, a file name, a file type, playing time, and a file size for each file. When a user checks the check box, its corresponding contents are selected as an object to be imported and the total playing time is updated. In this case, it is only the files with extensions like mp3 and WAV that are listed. If these files are imported into the library, the names of the imported files are changed in the extensions.

In the file edit display screen, the folders stored in the music data storage section 14 of the hard disk 2 are displayed on the folder display section 171. If a user selects one of the folders, the files in the selected one are displayed on the file list display section 172. Checking the check box of a file displayed on the section 172 and clicking the play button 161, the user is able to reproduce a song recorded in the file.

If the user also checks the check box of a file displayed on the section 172 and clicks the import button 97, the import of the selected file starts. Since, in this case, the type of the file is displayed in the file list only by the extension, it is likely that a problem will occur in the contents of the file. If that is the case, a dialogue box is displayed to allow the user to choose "continue" or "stop" importing the file. To stop the import of the file, the user clicks the stop button 119. Files that have been already imported when the import of the file is stopped, are registered in their current format.

The progress status of import of the file is displayed on the progress status display section 165. For example, "XX songs of XXX songs completed" or "XX%" is displayed in the progress bar. Alternatively, the order of a song that is currently imported, the estimated import time, and the percentage (%) of the imported songs is displayed.

A file that is imported to a library in the manner described above can also be reproduced if a user selects the file and clicks the play button 85.

Note that, in the above embodiment, audio data is recorded and reproduced; however, image data of movies or the like (moving images) can be recorded and reproduced.

As described above in detail, the present invention provides a contents management apparatus for managing the number of times contents are transferred between a computer and a recording and reproduction device. In this apparatus, the contents library management screen and the device management screen are displayed on the display section of the computer, and the contents-transferable number of times, which is predetermined for each content, is displayed on the library management screen. A number, which is obtained by subtracting a predetermined number from the contents-transferable number of times every check-out, is displayed, while a number, which is obtained by adding a predetermined number thereto every check-in, is displayed. The contents can thus be easily written to a device storage medium and read therefrom. Moreover, the number of duplicate contents, which can be recorded on the storage medium, can reliably be managed.

In the present invention, furthermore, tags are displayed on the respective management screens of each of a plurality of devices. If one of the tags is selected, its corresponding management screen is displayed to the forefront. Therefore, a management screen corresponding to each device can be selected easily and a process for each device can be performed rapidly.

In the present invention, furthermore, a library management screen having a security function and a device management screen are displayed on the display section of the computer correspondingly to each other. Therefore, even when an operator processes contents the security of which is not managed, he or she can management the security by reading those contents from the device management screen and writing them to the library management screen, with the result that the number of duplicate contents that can be recorded on a storage medium can be regulated with reliability.

## Claims

1. A contents management apparatus in a computer for managing the number of times contents are transferred between the computer and a recording and reproduction device, the contents management apparatus characterized by comprising:
management screen display means for displaying on a display section of the computer a library management screen of contents and a device management screen for managing contents of a device; and
contents management means for displaying the contents-transferable number of times, which is predetermined for each content, on the library management screen, and for displaying a number obtained by subtracting a predetermined number from the contents-transferable number of times every check-out when contents are transferred from the library management screen to the device management screen, and displaying a number obtained by adding a predetermined number to the contents-transferable number of times every check-in when the contents transferred to the device management screen are returned to the library management screen.

2. The contents management apparatus according to claim 1, **characterized in that** the contents management means includes a check-out list for managing a device whose contents are checked out.

3. The contents management apparatus according to claim 2, **characterized in that** the contents management means adds a contents-transferred device to the check-out list every check-out of each content, and deletes a contents-transferring device from the check-out list every check-in of each content.

4. The contents management apparatus according to claim 2, **characterized in that** the check-out list includes a flag indicating whether a check-out is allowed for each content, and the apparatus further comprises inhibit means for inhibiting a check-out of contents when the flag indicates that the check-out is not allowed.

5. A contents management apparatus in a computer for managing the number of times contents are transferred between the computer and a plurality of recording and reproduction devices, the contents management apparatus characterized by comprising:
management screen display means for displaying on a display section of the computer a library management screen for managing transfer of contents between the computer and each of the devices; and
contents screen selection means for selecting a tag corresponding to each of the devices on the library management screen and displaying a device management screen for managing the device of the selected tag to the forefront.

6. The contents management apparatus according to claim 5, characterized by further comprising contents management means for displaying the contents-transferable number of times, which is predetermined for each content, on the library management screen, and for displaying a number obtained by subtracting a predetermined number from the contents-transferable number of times every check-out when contents are transferred from the library management screen to the device management screen, and displaying a number obtained by adding a predetermined number to the contents-transferable number of times every check-in when the contents transferred to the device management screen are returned to the library management screen.

7. The contents management apparatus according to claim 6, **characterized in that** the contents management means includes a check-out list for managing a device whose contents are checked out.

8. The contents management apparatus according to claim 7, **characterized in that** the contents management means adds a contents-transferred device to the check-out list every check-out of each content, and deletes a contents-transferring device from the check-out list every check-in of each content.

9. The contents management apparatus according to claim 7, **characterized in that** the check-out list includes a flag indicating whether a check-out is allowed for each content, and the apparatus further comprises inhibit means for inhibiting a check-out of contents when the flag indicates that the check-out is not allowed.

10. A contents management apparatus in a computer for managing the number of times contents are transferred between the computer and a recording and reproduction device, the contents management apparatus comprising display means for displaying on a display section of the computer a library management screen of contents and a device management screen for managing contents of a device,
**characterized in that** the library management screen serves to display the number of times contents are transferable.

11. A contents management method in a computer for managing the number of times contents are transferred between the computer and a recording and reproduction device, the contents management method characterized by comprising the steps of:
displaying on a display section of the computer a library management screen of contents and a device management screen for managing contents of a device, and displaying the contents-transferable number of times, which is predetermined for each content, on the library management screen; and
displaying a number obtained by subtracting a predetermined number from the contents-transferable number of times every check-out when contents are transferred from the library management screen to the device management screen, and displaying a number obtained by adding a predetermined number to the contents-transferable number of times every check-in when the contents transferred to the device management screen are returned to the library management screen.
